# EUROPEAN PATENT APPLICATION

(11) **EP 4 799 517 A1**
(43) Date of publication of application: **02.09.2026**
(21) Application number: 26161069.5
(22) Date of filing: 26.02.2026
(51) Int. Cl.: A43B 23/02, A43D 3/02, B33Y 80/00

(54) **METHOD FOR MANUFACTURING A FOOTWEAR PART, ARTICLE OF FOOTWEAR, AND MANUFACTURING SYSTEM**

(30) Priority: 28.02.2025 CH 1912025; 30.04.2025 CH 4602025; 20.05.2025 CH 5462025; 31.07.2025 EP 25193014
(71) Applicant: On Clouds GmbH, 8005 Zürich (CH)
(72) Inventor: VOELCHERT, Johannes, 8005 Zürich (CH); SPADA, Silvano, 8005 Zürich (CH)
(74) Representative: Eichelhardt, Frank Robert

(57) **Abstract**

The invention concerns a method for manufacturing a footwear part (16a), comprising a provisioning step (44a) in which a footwear last (36a-d, 602, 700, 800, 900, 1000) and at least one parameter pertaining to the footwear last (36a-d, 602, 700, 800, 900, 1000) are provided to a manufacturing system (14a), a configuration step (46a) in which the manufacturing system (14a) is configured based on the at least one parameter, and a forming step (48a) in which the footwear part (16a) is formed using the manufacturing system (14a) as configured in the configuration step (46a). Furthermore, the invention pertains to an article of footwear (12a) comprising a footwear part (10a) manufactured by such a method and/or a footwear element derived from a footwear part (10a) manufactured by such a method. Further still, the invention concerns a manufacturing system (14a) for manufacturing a footwear part (10a), the manufacturing system (14a) configured to perform such a method.

## Description

### Technical Field

The present invention relates to a method for manufacturing a footwear part, and an article of footwear comprising the footwear part and/or a footwear element derived from the footwear part. Furthermore, the present invention concerns a manufacturing system for manufacturing a footwear part.

### Background

Apparel and footwear manufacturing continues to evolve to meet modern expectations for products that are high-performing, comfortable, lightweight, and sustainably produced. Traditionally, techniques such as knitting, weaving, or cut-and-sew have dominated the production of textile-based components. However, these methods often involve significant material waste, require multiple production steps, and depend heavily on manual labor, limiting scalability and efficiency.

To address these challenges, innovations have emerged that aim to automate the production process, reduce waste, and improve the functional characteristics of textile components. One such innovation is described in WO 2022/069583 A1, which discloses a method for producing a textile material, particularly a shoe upper, by applying a molten thermoplastic filament directly onto a footwear last. The filament is extruded from a spray head in the form of a helical strand and applied in a series of superimposed loops, forming a seamless and structured textile layer directly on the three-dimensional surface of the footwear last.

This approach represents a significant step toward more automated and material-efficient manufacturing. By depositing material directly onto a shaping tool, it becomes possible to precisely control the placement, layering, and geometry of textile structures. This reduces the need for additional assembly steps and offers the potential for custom-fitted, performance-oriented footwear components.

Despite these advances, there remains a significant need to accommodate the wide variety of foot shapes, sizes, and anatomical features found across the population. Conventional footwear lasts are typically fixed in form and represent averaged or idealized foot geometries, which limits their suitability for individualized footwear. Even modern production techniques often rely on a limited set of standardized lasts, making it difficult to produce footwear that offers a truly anatomical fit for users with non-standard foot shapes, such as high arches, wide forefeet, or asymmetries. As consumer demand for personalized and orthopedically optimized products grows, there is an increasing need for production methods that allow for dynamic or customizable shaping of the footwear last, enabling precise adaptation of the textile layer to a variety of foot morphologies. Addressing this need is critical for improving fit, comfort, and biomechanical performance in the final product.

### Summary

The invention concerns a method for manufacturing a footwear part, comprising a provisioning step in which a footwear last and at least one parameter pertaining to the footwear last are provided to a manufacturing system. In a configuration step of the method, the manufacturing system is configured based on the at least one parameter, and in a forming step, the footwear part is formed using the manufacturing system as configured in the configuration step.

The invention further pertains to an article of footwear, in particular a sports- and/or leisure shoe, comprising a, in particular the previously mentioned, footwear part manufactured by a method as disclosed herein, and/or a footwear element derived from a footwear part manufactured by a method as described herein.

In addition, the invention pertains to a manufacturing system for manufacturing a, in particular the aforementioned, footwear part, the manufacturing system configured to perform a method as described herein.

This allows for advantageously increased flexibility and efficiency. The solution according to the invention enables improved automation of the production of a footwear part. In particular, the manufacturing process can be adapted to different footwear lasts and/or to different states of a footwear last. Thus, high quality of the footwear part can be ensured for different footwear lasts. Furthermore, various footwear lasts can be used without compromising the quality of the footwear part to be manufactured. Through the configuration of the manufacturing system, sources of errors can be identified and/or resolved particularly easily.

The footwear part may be part of an article of footwear or may comprise the entire article of footwear. An article of footwear may comprise at least an upper, a sole unit, a fastening unit, and/or any other applicable unit. The sole unit preferably comprises an outsole and a midsole and may additionally comprise an insole.

The sole unit, preferably the midsole may be attached to the footwear last. The midsole may be for example mechanically, magnetically, adhesively, electrostatically, by a negative pressure, a combination thereof, or the like, detachably held at the footwear last. The midsole also may be detachably held at the footwear last by a holding element. The holding element may enclose at least part of the midsole and the footwear last. The holding element may be made from textile fabric, silicone or the like.

The holding element may comprise at least one fastening element so that the holding element can be attached to and later be detached from the footwear last and the midsole during or after applying the thermoplastic filament onto the footwear last. The fastening element may be a hook and loop fastener, a button fastener, a hook fastener or the like. The fastening element may preferably be positioned in an area of the holding element located at the midsole. The midsole may be connected to the upper by applying the thermoplastic filament also partly onto the midsole.

In a preferred embodiment, the article of footwear is a sports shoe, in particular a running shoe, a tennis shoe, or the like, a sneaker, a hiking shoe, or the like. The footwear part may for example form a part of the upper or form the entire upper or may form a part of the sole unit or form the entire sole unit. It may also be envisaged that the footwear part may be a precursor that may be further processed into a footwear element of the article of footwear. The footwear element may for example be derived from the footwear part by adding a print and/or at least one additional element, for example a reinforcement element, a design element, or the like, and/or at least one additional filament layer, or the like to the footwear part. Alternatively or additionally, the footwear element may also be derived from the footwear part by cutting and/or compression molding the footwear part, in particular a layer and/or a block, for example a wadding block, of a sprayed thermoplastic filament, that was, for example, previously sprayed onto the footwear last. The footwear element may for example form a part of the upper or form the entire upper or may form a part of the sole unit or form the entire sole unit.

The footwear last may be part of the manufacturing system for manufacturing the footwear part, in particular after the provisioning step. The footwear last may be configured to shape the footwear part. For example, the footwear last may have a surface, in particular a footwear part contact surface, that may be configured to define the shape of the footwear part. For example, the footwear part may be shaped by applying it to the surface, in particular the footwear part contact surface, of the footwear last. The footwear part contact surface may particularly refer to a surface of the footwear last on which the footwear part rests after being applied to the footwear last.

In this disclosure "(the) at least one" may refer to one single entity, a plurality of entities, in particular out of a set of entities, or to all entities of the set of entities.

The footwear part may be formed by a, in particular the previously mentioned, thermoplastic filament. The thermoplastic filament may be a polymer composition. The polymer composition may comprise, for example, polyester, polyamide, polyether block amide (PEBA), for example PEBAX^{®} (Arkema), thermoplastic polyurethane (TPU), such as Desmopan^{®} 2790A or Desmopan^{®} 9392A (Covestro), ethylene vinyl acetate (EVA), polyolefin, such as polyethylene or polypropylene, or mixtures thereof. The thermoplastic filament may contain one or more additives, like pigments, foaming agents, cross-linking agents, etc.

The thermoplastic filament may be provided by the manufacturing system, in particular a filament output unit of the manufacturing system. The filament output unit may be configured to spray the thermoplastic filament. The term "spraying" in this context means that the thermoplastic filament travels through air, for example over a distance of at least 1 cm, at least 2 cm, or at least 5 cm, before being deposited and forming the footwear part. Spraying the thermoplastic filament as disclosed herein is not to be confused with 3D printing, which is a completely different process. The footwear part made from the sprayed thermoplastic filament may have a porous, yet non-foamy, and/or fibrous structure, in particular contrary, for example, to a footwear part manufactured by 3D printing and/or by molding and possibly by subsequent foaming.

The filament output unit may comprise a dosing unit, a melting unit, and/or a nozzle unit. An example of such a filament output unit is disclosed in WO 2022/069583 A1.

The filament output unit may be configured to process a filament raw material, e.g. a polymeric material or the like, in order to provide the thermoplastic filament. The melting unit may be configured to melt the filament raw material, which may then be used to manufacture the footwear part. The melting unit may include an extruder, with the extruder possibly having a barrel and a screw, preferably for conveying the filament raw material. The screw may be arranged inside the barrel. The melting device may also include an output material heating unit. The filament raw material may be melted by the output material heating unit. By means of the nozzle unit the molten filament raw material may be dispensed as the thermoplastic filament.

The filament raw material may comprise a polymer composition, that may comprise, for example, polyester, polyamide, polyether block amide (PEBA), for example PEBAX^{®} (Arkema), thermoplastic polyurethane (TPU), such as Desmopan^{®} 2790A or Desmopan^{®} 9392A (Covestro), ethylene vinyl acetate (EVA), polyolefin, such as polyethylene or polypropylene, or mixtures thereof. The filament raw material may contain one or more additives, like pigments, foaming agents, cross-linking agents, etc.

The dosing unit may comprise a pump, a pump drive and a dosing head. The pump may be configured to generate pressure for dispensing the molten filament raw material as the thermoplastic filament, in particular through the nozzle unit. The pump may be configured to control, in particular fine tune, the output pressure of the molten filament raw material through the nozzle unit. Alternatively, the filament output unit may be implemented without a pump to generate pressure for dispensing the thermoplastic filament, wherein the thermoplastic filament may be dispensed by means of the extruder and preferably sprayed as the thermoplastic filament.

The nozzle unit may comprise at least one gas outlet opening, through which a flow of gas, in particular compressed air, may be output. The flow of gas may be provided to influence the filament emerging from the nozzle unit. Preferably, the nozzle unit is designed in such a way that a helical filament is produced. This helical shape of the filament may be generated by a corresponding application of gas flow from several gas outlet openings. The gas outlet openings may be arranged around a filament outlet of the nozzle unit, in particular at a uniform distance and preferably in a circular arrangement. Preferably, a gas outlet direction of the at least one gas outlet opening extends at an angle to a filament dispense direction of the nozzle unit. Alternatively, the nozzle unit may also be rotated to create the helical shape of the filament.

The thermoplastic filament may be sprayed onto the footwear last for manufacturing the footwear part, in particular in the forming step.

The manufacturing system, in particular the filament output unit, may comprise a handling unit to control an application path for spraying the thermoplastic filament onto the footwear last. The application path preferably refers to a relative movement path of the nozzle unit with regard to footwear last. The handling unit may be configured to generate a relative movement of the footwear last with respect to the filament output unit, in particular the nozzle unit. For example, the handling unit may be, preferably detachably, connected to the footwear last to move it. Alternatively or additionally, the handling unit may be connected to the nozzle unit or may also be part of the filament output unit to move the nozzle unit. The handling unit may be implemented as or may comprise a robotic handler or the like.

In the forming step, the thermoplastic filament may be formed as a plurality of path segments, preferably in the form of loops, to produce the footwear part. In other words, the thermoplastic filament forming the footwear part may be arranged in a looped manner having several intersecting turns and forming several layers one on top of the other. Such structure is, for example, disclosed in WO 2022/069583 A1.

Alternatively, the thermoplastic filament may at least partially or entirely formed as a wadding. Herein, a "wadding" may be understood as a structure in which the thermoplastic filament is in a disordered state and may take up a higher volume compared to an ordered state of the thermoplastic filament, where the thermoplastic filament may be present as a plurality of path segments, preferably in the form of loops. Such wadding may be obtained by an increased distance between the nozzle unit and the footwear last during spraying the thermoplastic filament compared to a distance between the nozzle unit and the footwear last while spraying the thermoplastic filament in the form of the plurality of path segments, in particular loops.

The manufacturing system may comprise a heating chamber. The heating chamber may be implemented as an oven, a heating tunnel, and/or the like. The heating chamber may be configured for heating the footwear last and/or the sole unit, preferably the midsole prior to applying the thermoplastic filament onto the footwear last. The heating chamber may comprise a controller to maintain a certain temperature of the footwear last and/or the sole unit. After heating via the heating chamber, the footwear last and/or the sole unit may be conveyed to a further manufacturing station, preferably the filament output unit. The conveying is preferably carried out by the robotic handler of the handling unit. The robotic handler may be configured to automatically pick up the footwear last and/or the sole unit from the heating chamber and to convey the footwear last and/or the sole unit to the filament output unit.

The at least one parameter may be available to the manufacturing system as data information, in particular after being provided to the manufacturing system in the provisioning step.

Configuring the manufacturing system may be understood to mean that manufacturing parameters for manufacturing the footwear part are defined and/or set, preferably based on the at least one parameter pertaining to the footwear last. In a preferred embodiment, the configuration may avoid the need for measurements during the forming step, such as distance measurements or the like, particularly those pertaining to the footwear last. Preferably, the configuration of the manufacturing system, especially the configuration step, may be fully completed before the forming step is carried out. Alternatively, however, it may be envisaged that during and/or after the forming step, measurements, for example inspection measurements or the like, particularly pertaining to the footwear last, are carried out.

The configuration of the manufacturing system may include the configuration of the filament output unit, the handling unit, and/or other components of the manufacturing system. For example, the configuration of the manufacturing system may include the determination of the relative movement path of the nozzle unit to the footwear last, i.e. in particular the application path.

In a preferred embodiment, during the configuration step at least part of the application path, preferably the entire application path, for applying the thermoplastic filament onto the footwear last for forming the footwear part, in particular the upper element, of the footwear part may be determined. By determining at least part of an application path for applying a thermoplastic filament onto the footwear last during the configuration step, the system enables precise control over the placement and geometry of the upper element. This supports optimized material usage, reduces waste, and ensures accurate conformity to the underlying footwear last shape.

During the forming step the footwear part, preferably an, in particular the previously mentioned, upper element of an, in particular the previously mentioned, article of footwear, is formed by applying a, in particular the previously mentioned, thermoplastic filament onto the footwear last, in particular along an, preferably the previously mentioned, application path as determined during the configuration step. This allows potential sources of error that may lead to undesired product properties of the footwear part to be identified particularly easily and, if necessary, adjusted.

It may be envisaged that the manufactured footwear part may be inspected with respect to the desired properties, in particular geometric properties, in particular in an inspection step. Inspection of the manufactured footwear part may be performed automatically and/or manually by a person. The manufacturing system may comprise an inspection unit for inspecting the manufactured footwear part. The inspection unit may comprise an optical system, for example a camera system, a microscope, a 3D-scanner, a caliper, or the like. The inspection unit may be configured to provide at least one feedback parameter pertaining to the manufactured footwear part to the manufacturing system, in particular to a control unit of the manufacturing system. The control unit may comprise at least one processor and a memory element, as well as an operating program stored on the memory element. The memory element may preferably be implemented as a digital storage medium, for example as a hard disk or the like.

The inspection unit may be connected wirelessly and/or via a wired connection to the control unit. The at least one feedback parameter may correspond to an actual parameter of the manufactured footwear part, in particular an actual geometric parameter of the manufactured footwear part. The manufacturing system, in particular the control unit, may be configured to process the at least one feedback parameter in order to adjust the configuration of the manufacturing system, for example the application path of the thermoplastic filament for future manufacturing of footwear parts. The at least one feedback parameter may also be input manually, preferably via an input unit of the manufacturing system. The input unit may comprise a touchscreen, a keyboard, a rotary knob, a button, a keypad, a slider, a combination thereof, or the like, to enable the input of the at least one feedback parameter by a person. The input unit may be in data communication with the control unit of the manufacturing system, in particular wirelessly and/or via a wired connection. The manufacturing system, in particular the control unit, may also use the at least one feedback parameter for machine learning, in particular to improve the configuration of the manufacturing system.

The at least one parameter may be provided to the manufacturing system via the input unit of the manufacturing system, for example by a person or a robot.

Alternatively or additionally, it may be envisaged that the at least one parameter is, preferably automatically, sent to the manufacturing system, in particular the control unit, or sensed directly by the manufacturing system.

During the provisioning step, the at least one parameter may be provided as a geometric parameter. This allows the manufacturing system to be easily adapted to footwear lasts with different geometrical properties. This enables particularly precise and flexible production of a footwear part.

The geometric parameter may comprise a shape parameter, a dimensional parameter, for example a length parameter, a width parameter, or height parameter, a surface structure parameter, or the like, of the footwear last. It may also be envisaged that the geometric parameter is a parameter indicative of the geometry of the footwear last, for example a pose of at least one movable part of the footwear last, a composition of the footwear last having interchangeable footwear last elements, for example an information about the presence of footwear last elements, preferably by means of identification tags, a pressure of the footwear last, preferably a gas pressure of at least one inflatable part of the footwear last, at least one manufacturing parameter of the footwear last, or the like. Alternatively or additionally, the at least one parameter may also comprise a temperature parameter, or the like, pertaining to the footwear last.

During the provisioning step, the at least one parameter may be determined at least partially by sensing using a sensor unit. Thus, the at least one parameter can be captured particularly easily and advantageously in an automatic manner. In particular, this allows for a highly efficient configuration of the manufacturing system to be achieved.

Determining the at least one parameter at least partially by sensing may correspond to directly sensing the at least one parameter or by determining the at least one parameter from at least one reference parameter pertaining to the footwear last sensed via the sensor unit. The sensor unit may be part of the manufacturing system. For example, the sensor unit may be implemented integrally with the filament dispensing unit, the handling unit, or the like. Alternatively, the sensor unit may also be implemented separately from the manufacturing system. The sensor unit may be data-connected to the manufacturing system, in particular the control unit, for example wirelessly and/or via a wired connection. The footwear last may comprise a communication unit for transferring data between the footwear last and/or the sensor unit and the manufacturing system, in particular the control unit, preferably wirelessly and/or via a wired connection. The sensor unit and/or the control unit may be configured to determine the at least one parameter based on the at least one reference parameter. Alternatively, the sensor unit may be configured to determine the at least one parameter by directly sensing it. It may also be envisaged that the at least one parameter is provided to the manufacturing system after the at least one reference parameter is provided to the manufacturing system, in particular the control unit, by determining the at least one parameter based on the at least one reference parameter, preferably via the control unit.

The sensor unit may be configured to sense at least one or more of the following: a visual code, in particular an identification tag, for example a barcode, a QR code, or the like, a shape, a dimension, a surface structure, or the like. The sensor unit may include at least one optical sensor, such as a camera or image sensor, or the like, preferably for capturing visual codes, for example barcode, QR code, or the like, and/or for sensing a shape, a dimension, and/or a surface structure. Alternatively or additionally, the sensor unit may comprise at least one distance sensor, preferably for determining shapes and/or dimensions, for example a laser triangulation sensor, a structured light sensor, a time-of-flight sensor, or the like. It may also be envisaged, alternatively or additionally, that the sensor unit comprises an RFID reader and/or other wireless identification sensors, for example NFC, UWB, or the like, which are configured to detect a corresponding identification tag.

During the provisioning step the at least one parameter may be determined at least partially by a configuration setting of the footwear last. Thus, footwear lasts configured differently from one another can be used in the manufacture of the footwear part. This enables a manufacturing method that is particularly flexible while simultaneously precise and reliable.

The footwear last may be configurable, i.e., may be implemented as a variable footwear last, for example by having the at least one inflatable part and/or by having the at least one movable part and/or by having at least one removable footwear last element and/or at least one addable further footwear last element. The configuration setting may correspond to the at least one reference parameter or to the at least one parameter. A footwear last element, in particular at least the at least one footwear last element and/or the at least one further footwear last element, may form at least part of the footwear part contact surface, if part of the composite and/or final footwear last. A footwear last element, may form a part of the footwear last, for example a heel section, a toe section, a middle foot section, or the like. The configuration setting may be defined by the composition of the footwear last, in particular by a presence of distinct footwear last elements, the pose of the at least one movable part, and/or the pressure of the footwear last.

During the provisioning step the at least one parameter may be determined at least partially based on a pressure of the footwear last. Thus, a footwear last that is at least partially deformable by pressure can be used flexibly and efficiently for the production of the footwear part.

Preferably the pressure of the footwear last may correspond to a gas pressure. Alternatively, the pressure of the footwear may also correspond to a mechanical pressure present at the footwear last. The sensor unit may be configured to measure the pressure of the footwear last. The sensor unit may comprise at least one pressure sensor, in particular a gas pressure sensor, to measure the pressure, preferably the gas pressure, of the footwear last. The at least one pressure sensor may be arranged at the footwear last.

The pressure of the footwear last may correspond to the at least one reference parameter or to the at least one parameter. The footwear last may comprise at least one inflatable part. The at least one inflatable part may comprise at least a part of the footwear part contact surface of the footwear last. For example, the footwear last may comprise a base body at which the at least one inflatable part may be arranged. The base body may comprise at least a part of the footwear part contact surface. It may also be envisaged that the at least one inflatable part may constitute the complete footwear part contact surface, wherein the at least one inflatable part may encompass a majority, in particular at least 50 %, preferably at least 75 % and particularly preferable at least 90 % of an outer surface, of the base body.

The at least one inflatable part also may encompass a minority, in particular less than 50 % of the outer surface of the base body. The at least one inflatable part may be detachably held at the footwear last. It may be envisaged that the footwear last comprises an outer skin, that may preferably form the footwear part contact surface of the footwear last. The outer skin may be implemented separately from the at least one inflatable part and/or the base body. The outer skin may be configured to stretch and/or contract, depending on an inflation state of the at least one inflatable part. The outer skin may be configured to bridge gaps of the footwear last that may be generated by inflating and/or deflating the at least one inflatable part, in particular to avoid gaps at the footwear part contact surface of the footwear last. It may be envisaged that the outer skin is detachably arranged at the base body and/or the at least one inflatable part.

In a preferred embodiment, the at least one inflatable part may substantially form the footwear last, wherein the footwear last may, in particular, be implemented without the base body. By inflating the at least one inflatable part, different circumference steps, preferably between 1 mm and 10 mm, of the footwear last may be achieved.

The at least one inflatable part and/or the outer skin may be 3D-printed. This allows different shapes of the at least one inflatable part and or the outer skin to be created quickly and flexibly. Complex geometries for the at least one inflatable part and/or the outer skin can also be realized. In addition, 3D printing offers cost and time savings in the production of the at least one inflatable part and/or the outer skin.

Through 3D printing, the at least one inflatable part may be provided without seams and/or adhesives, in particular without parting lines, ejector pin marks or the like. The at least one inflatable part may have anisotropic properties as a result of 3D printing. The at least one inflatable part may exhibit a layer structure as a result of 3D printing, that may be particularly visible at curved surfaces. Preferably, the at least one inflatable part may be 3D-printed in the method of manufacturing the manufacturing device.

The 3D-printing is preferably performed in a semi-solid environment, for example in a suspension gel, or the like. In other words, the 3D-printing of the at least one inflatable part and/or the outer skin may be performed at least partly without a solid support for the at least one inflatable part and/or the outer skin. The at least one inflatable part and/or the outer skin may be rinsed with water or the like after printing. The at least one inflatable part and/ or the outer skin may be made from silicone, polyurethane rubber, foam, plastics, resins, biological materials, liquid wood pulp, liquids metals or any other solidifying material.

The at least one inflatable part may be fluidically connected to a gas exchange interface of the footwear last, to deflate and/or inflate the at least one inflatable part. Two or more inflatable parts may be inflated and/or deflated simultaneously and/or independently of each other. The at least one inflatable part may be directly fluidically connected to the gas exchange interface or via at least one gas duct of the footwear last. Preferably, the gas exchange interface is attached to the at least one inflatable part.

The base body of the footwear last may comprise at least one recess area configured to accommodate the at least one inflatable part. The at least one recess area may have various depths into the footwear last according to different embodiments of the invention. It may be envisaged that the at least one inflatable part inserted into the at least one recess area is completely accommodated with the at least one recess area or at least partially protrudes from the at least one recess area according to the inflation state of the at least one inflatable part and/or the depth of the recess area into the footwear last.The at least one inflatable part and/ or the outer skin may comprise sections with different flexibilities. Thus, the at least one inflatable part and/or the outer skin can exhibit different properties and be adapted to various manufacturing requirements. In particular, specific shapes can be realized especially easily during inflation.

In other words, the at least one inflatable part and/or the outer skin may comprise at least two sections with different mechanical deformation behaviors. The different mechanical deformation behaviors and/or flexibilities may be realized by different materials, different wall thickness, different surface structures, and/or via attached, particularly adhered, elements.

The at least one inflatable part and/or the outer skin comprise sections with different wall thicknesses. This allows different flexibility characteristics to be implemented particularly easily.

The varying of the wall thickness may be continuous and/or discontinuous. For example, it may be envisaged that the at least one inflatable part and/or the outer skin comprise at least two sections that each have a constant wall thickness that differs from each other. For example, the at least one inflatable part and/or outer skin may comprise at least one first section having a first thickness and at least one second section having a second thickness. The first thickness may differ from the second thickness, preferably at least by at least 10 %, by at least 20 % or by at least 50 %.

The at least one inflatable part and/or the gas exchange interface may be connected to a gas supply of the manufacturing system for inflating the at least one inflatable part. The gas supply may at least partially be embodied as a compressed gas supply line and/or may comprise a compressor to provide compressed gas, a blower, a gas pump, or the like. It may be envisaged that the at least one parameter is determined at least partially based on a set gas pressure of the gas supply. The gas supply may be connected to the manufacturing system, in particular the control unit, for providing an information pertaining to the pressure of the footwear last, preferably the set gas pressure, to the manufacturing system, in particular to the control unit. The gas supply may be implemented separately from the footwear last, in particular separately from the at least one inflatable part. For example, the gas supply may be at least partially integrated with the handling unit. Alternatively, the gas supply may be at least partially integrated with the footwear last. The gas may be air or any other suitable gas for inflating the at least one inflatable part.

The footwear last may comprise at least one pressure relief valve that may be fluidically connected to the at least one inflatable part. Preferably, the at least one pressure relief valve is arranged at the inflatable part. The at least one pressure relief valve may be part of the gas exchange interface. The manufacturing system, in particular the footwear last, may comprise a pressure reducer that is arranged between the at least one inflatable part and the gas supply. The pressure reducer may be configured to reduce a pressure of the gas supplied by the gas supply to suit the desired pressure for the at least one inflatable part. The pressure reducer may be part of the gas exchange interface.

The manufacturing system, in particular the footwear last, may comprise at least one closeable gas port that may be opened for deflating the at least one inflatable part. The at least one closeable gas port may be part of the gas exchange interface. The closeable gas port may also be used to inflate the at least one inflatable part. Alternatively, the closeable gas port may be implemented separately from a gas port of the footwear last for inflating the at least one inflatable part. Alternatively or additionally, the at least one inflatable part may be fluidically connected to a negative pressure unit of the manufacturing system for deflating the at least one inflatable part, preferably via the gas exchange interface. The negative pressure unit may comprise a vacuum pump or the like. The negative pressure unit may be arranged separately from the footwear last. Alternatively, the negative pressure unit may be at least partially integrated with the footwear last. The negative pressure unit and/or the gas supply may be fluidically connected to the gas exchange interface via a gas duct unit of the manufacturing system. The gas duct unit may be integrally formed with the handling unit or alternatively implemented separately from the handling unit.

A wall of the at least one inflatable part may enclose an inflation chamber of the at least one inflatable part into which gas is introduced to inflate the at least one inflatable part, preferably via the gas exchange interface. In other words, the inflation chamber may correspond to an inflatable volume of the at least one inflatable part. The at least one pressure sensor may be arranged at the at least one inflatable part, preferably in the inflation chamber. The at least one pressure sensor may be configured to measure a gas pressure of the inflatable part, in particular in the inflation chamber. An inflation state of the at least one inflatable part may define the at least one parameter. The inflation state may denote a strength of the inflation of the at least one inflatable part. The degree of inflation may, for example, be increased and/or decreased while shaping the footwear part on the footwear last. By changing the inflation state, geometric properties of at least one inflatable part, and preferably of the footwear last, may be modified.

During the provisioning step, the at least one parameter may be determined at least partially based on at least one identification tag of the footwear last. Thus, the at least one parameter can be determined particularly accurately and reliably.

The at least one identification tag may be configured as a physical and/or electronic element. In particular, the at least one identification tag may comprise a readable and/or writable data carrier, such as a barcode, QR code, RFID tag, NFC chip, or similar electronic or optoelectronic component. The at least one identification tag may comprise at least information pertaining to the at least one parameter or the at least one parameter. The sensor unit may be configured to sense the at least one identification tag of the footwear last for determining the at least one parameter.

The at least one identification tag may be arranged on an outer surface of the footwear last. The at least one identification tag may be printed, glued, or the like to the outer surface of the footwear last. Alternatively, the at least one identification tag may also be arranged inside the footwear last. For example, the footwear last may be composed of exchangeable footwear last elements that each may comprise an identification tag. The at least one parameter or the at least one reference parameter may for example be defined by the composition of the footwear last, i.e. by the identifications tags of the footwear last elements that compose the footwear last.

During the provisioning step, the at least one parameter may be determined at least partially based on a pose of at least one movable part of the footwear last. By determining the at least one parameter at least partially based on the pose of a movable part of the footwear last, the manufacturing system can adapt dynamically to the actual geometric configuration of the footwear last. This allows for more precise adjustment of the manufacturing process.

The at least one reference parameter or the at least one parameter may be at least partially defined by the pose of the at least one movable part. The footwear last may comprise a, in particular the previously mentioned, base body, at which the at least one movable part may be movably arranged, for example so as to be linearly and/or rotatably movable relative to the base body. By moving the at least one movable part, in particular relative to the base body, geometric properties of the footwear last may be modified, such that, in particular, the pose of the at least one movable part defines the at least one parameter. The sensor unit may be configured to detect or sense the pose of the at least one movable part, for example optically. Preferably, the footwear last may comprise an actuator for changing the pose of the at least one movable part, in particular relative to the footwear last. The actuator may be a screw, a slider, a rotary knob, or the like. The actuator may be integrally formed with the base body and/or the at least one movable part or may be detachably attachable to the at least one movable part for changing a pose of the at least one movable part. Alternatively or additionally, it may be envisaged that the footwear last comprises a drive, for example at least one electric servo motor or the like, to change the pose of the at least one movable part, in particular relative to the base body. The drive may be embedded in the base body of the footwear last. The drive may be a chargeable electric servo motor. The pose may comprise a position and/or a orientation of the at least one movable part, in particular relative to the base body. The at least one parameter may be determined based on the use of the drive. The drive may connected to the communication unit to transfer the information of the drive pertaining to the at least one parameter or the at least one parameter to the manufacturing system, in particular the control unit. The drive may be connected wirelessly and/or via a wired connection to the communication unit. It may be envisaged that the footwear last comprises an enclosure skin, that may preferably form the outer surface of the footwear last. The enclosure skin may be implemented separately from the at least one movable part and/or the base body. The enclosure skin may be implemented as a flexible wrapping layer. The enclosure skin preferably encloses the at least one movable part and/or the base body. The enclosure skin may be configured to stretch and/or contract, depending on the pose of the at least one movable part, in particular relative to the base body. The enclosure skin may be configured to bridge gaps of the footwear last that may be generated by moving the at least one movable part, in particular to avoid gaps at the outer surface of the footwear last. It may be envisaged that the enclosure skin is detachably wrapped around the base body and/or the at least one movable part. It may also be envisaged that the enclosure skin may be detached from the base body and/or the at least one movable part for configuring the footwear last, in particular for moving the at least one movable part, preferably manually. For example, the enclosure skin is removed from the base body and the at least one movable part and the actuator is detachably attached to the at least one movable part to adjust a pose of the at least one movable part, preferably relative to the base body. After the pose of the at least one movable part is adjusted via the actuator, the actuator may be detached from the at least one movable part and the enclosure skin may be arranged around the base body and/or the at least one movable part.

According to an embodiment of the invention, the movable part may be a heel section being moveable relative to the base body of the footwear last. The heel section may also be removably arranged at the base body. The movable heel section may enable an easier removal of the footwear part, preferably the shoe upper from the footwear last after manufacturing of the shoe upper. In addition, the movable heel section also allows an easier insertion of the footwear last back into the shoe upper. The heel section may be designed in such a way that it enables the heel section to easily slide and glide along the shoe upper but still holds the shoe upper tightly to the footwear last. The movable heel section can simplify rework processes during the production of the article of footwear and repair processes of the article of footwear, which can reduce waste and defect ratios.

According to a further embodiment, the movable part may also be a middle foot section and/or a toe section of the footwear last, or the like.

During the provisioning step, the at least one parameter is determined at least partially based on at least one manufacturing parameter of the footwear last. By determining the at least one parameter at least partially based on at least one manufacturing parameter of the footwear last, the method enables tighter integration between the production process of the footwear part and the configuration of the footwear last. This allows for a flexible, precise and fast manufacturing process.

The at least one manufacturing parameter may correspond to a geometric manufacturing parameter used for manufacturing the footwear last, for example during 3d-printing or the like of the footwear last. The at least one manufacturing parameter may be a set parameter used for manufacturing the footwear last. The at least one manufacturing parameter of the footwear last may correspond to the at least one reference parameter or to the at least one parameter. The footwear last may be manufactured by a footwear last manufacturing device that may be part of the manufacturing system. Alternatively, the footwear last manufacturing device may be implemented separately from the manufacturing system. The footwear last manufacturing device may be connected to the manufacturing system, in particular the control unit, to transfer, in particular provide, the at least one manufacturing parameter to the manufacturing system, preferably the control unit. The footwear last manufacturing device may comprise a 3D-printer, an injection molding machine, a CNC milling machine, or the like.

During the provisioning step, the at least one footwear last may be manufactured based on a foot shape. By manufacturing the at least one footwear last during the provisioning step based on an individual foot shape, the resulting footwear last closely matches the anatomical features of the wearer's foot. This leads to improved comfort, better fit, and optimized performance of the final footwear product. Moreover, this approach enables efficient personalized production, reducing the need for manual adjustments and minimizing material waste.

The foot shape may be determined at least partially manually, for example via a caliper, a measuring tape, or the like, and/or at least partially automatically. In a preferred embodiment, the foot shape may be determined completely automatically. The manually determined information pertaining to the foot shape, which may correspond to the at least one parameter or may be used to determine the at least one parameter, may be input to the footwear last manufacturing device via its user interface and/or to the manufacturing system via the input unit. The foot shape or a information pertaining to the foot shape may be determined, preferably automatically, via a foot scanning unit. The foot scanning unit may be part of the manufacturing system or implemented separately from the manufacturing system. The foot scanning unit may comprise a 3D scanner, a pressure measurement platform, a contour gauge, or the like. The foot scanning unit may be connected to the manufacturing system, in particular the control unit, for transferring the information pertaining to the foot shape or the at least one parameter that is determined based on the foot shape, to the manufacturing system, in particular to the control unit. The at least one manufacturing parameter may be defined by the foot shape. The foot shape or an information pertaining to the foot shape may correspond to the at least one reference parameter or to the at least one parameter.

The at least one footwear last may be implemented as a, in particular the already aforementioned, variable footwear last, wherein its shape may be adjusted during the provisioning step. By implementing the at least one footwear last as a variable footwear last, whose shape may be adjusted during the provisioning step, the system allows dynamic adaptation to individual foot shapes or manufacturing requirements. This improves fit accuracy, reduces the need for multiple static lasts, and supports automated, on-demand customization. It also enhances manufacturing flexibility and reduces tooling costs.

The footwear last may be adjusted by changing the inflation status of the footwear last, by moving the at least one movable part, by removing at least one footwear last element and/or by adding at least one further footwear last element.

It may be envisaged that different surface structures of the footwear last may be created by changing the pose of the movable part. For example, at least one recess in the outer surface of the footwear last may be created by moving the at least one movable part. The at least one recess may allow for the arrangement of additional manufacturing elements, for example insert parts or the like. The manufacturing element may be part of the footwear part to be manufactured. Alternatively, the manufacturing element may also be an element that is only used during manufacturing the footwear part but is not part of the finished manufacturing part. Such a manufacturing element may be, for example, used for shaping the footwear part, wherein the manufacturing element may be arranged on the footwear part contact surface of the footwear last, in particular in the recess, and the footwear part may be shaped at least partially by the manufacturing element when applied onto the footwear last.

During the provisioning step, the at least one footwear last may be provided by removing at least one, in particular the aforementioned, footwear last element of the footwear last, and/or by supplementing the footwear last with at least one, in particular the aforementioned, further footwear last element. By providing the at least one footwear last during the provisioning step through removal and/or supplementation of at least one footwear last element, the manufacturing method as described herein enables a modular construction approach. This allows for quick and flexible adaptation of the footwear last geometry to different foot shapes, sizes, or design requirements without the need for entirely new tooling. It supports scalable customization, reduces material waste, and simplifies inventory management by allowing reconfiguration of existing components.

The methods, elements and articles disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 contains a schematic representation of a manufacturing system for manufacturing a footwear part.
Figure 2 shows an article of footwear comprising the footwear part manufactured using the manufacturing system in a perspective view.
Figure 3 shows a side view of a footwear last used to manufacture the footwear last.
Figure 4 depicts a schematic sequence of a method for manufacturing the footwear part.
Figure 5 shows a cross-sectional view of a footwear last for manufacturing a footwear part in a first alternative embodiment.
Figure 6 shows a side view of a footwear last for manufacturing a footwear part in a second alternative embodiment.
Figure 7 shows a cross-sectional side view of a footwear last for manufacturing a footwear part in a third alternative embodiment.
Figure 8 shows a top view of a footwear last for manufacturing a footwear part and a midsole in a fourth alternative embodiment.
Figure 9 shows a bottom view of the footwear last for manufacturing the footwear part and the midsole in the fourth alternative embodiment.
Figure 10 shows a cross-sectional view of a footwear last for manufacturing a footwear part in a fifth alternative embodiment.
Figure 11 shows a side view of a footwear last for manufacturing a footwear part in a sixth alternative embodiment.
Figure 12 shows a side view of a footwear last for manufacturing a footwear part in a seventh alternative embodiment.
Figure 13 shows an isometric view of a footwear last for manufacturing a footwear part in an eight alternative embodiment.
Figure 14 shows cross-sectional views of the footwear last for manufacturing the footwear part in the eight alternative embodiment.
Figure 15 shows a cross-sectional view of an inflatable part in a ninth alternative embodiment.

### Detailed Description

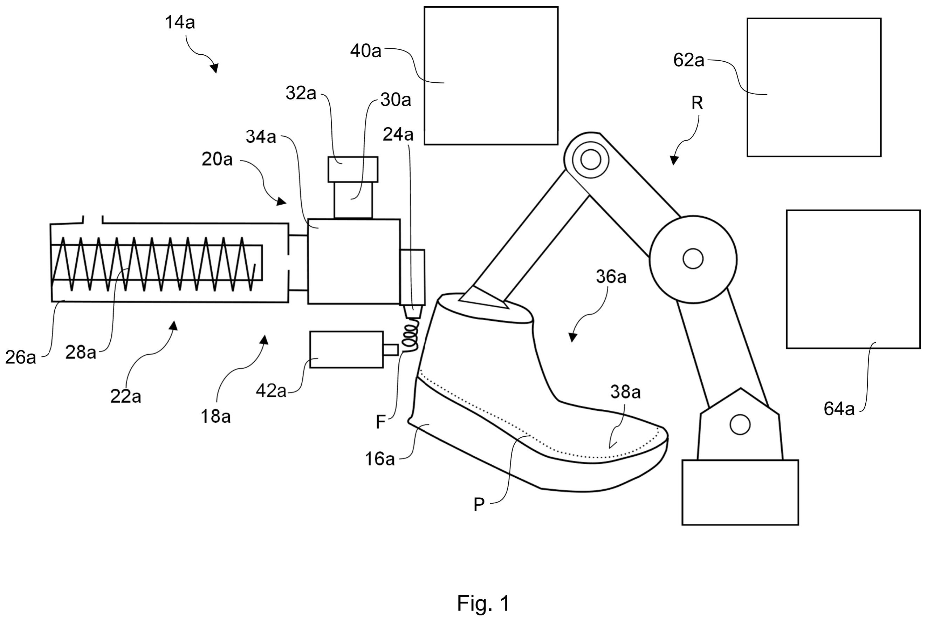

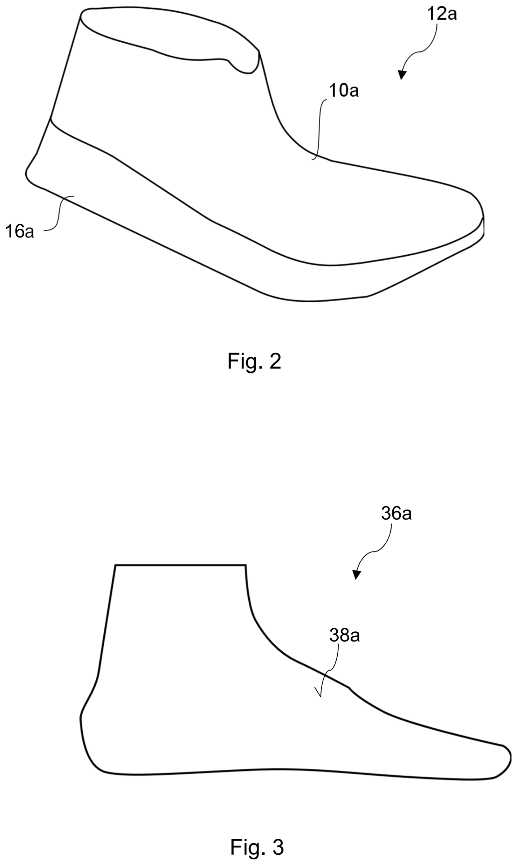

Figure 1 shows a schematic overview of a manufacturing system 14a for manufacturing a footwear part 10a that is implemented as an upper element of an article of footwear 12a. The article of footwear 12a is depicted in Figure 2 and is implemented as a running shoe.

The upper element forms an upper of the article of footwear 12a. The article of footwear 12a comprises an outsole (not shown here) that is attached to a midsole 16a of the article of footwear 12a.

The footwear part 10a is made from a sprayed thermoplastic filament. The thermoplastic filament F is a polymer composition. The polymer composition is a thermoplastic polyurethane, such as Desmopan^{®} 2790A or Desmopan^{®} 9392A (Covestro).

The thermoplastic filament F of the footwear part 10a comprises a plurality of path segments in the form of intersecting loops (not shown here).

The thermoplastic filament F is provided by a filament output unit 18a of the manufacturing system 14a. The filament output unit 18a is configured to spray the thermoplastic filament F. The filament output unit 18a comprises a dosing unit 20a, a melting unit 22a and a nozzle unit 24a.

The melting unit 22a is configured to melt a filament raw material that is a polymer composition, e.g. a thermoplastic polyurethane, which is then used to manufacture the footwear part 10a. The melting unit 22a comprises an extruder having a barrel 26a and a screw 28a. The screw 28a is arranged in the barrel 26a. For melting the filament raw material, the melting unit 22a comprises an output material heating unit (not shown).

The nozzle unit 24a is configured to dispense the molten filament raw material. The dosing unit 20a comprises a pump 30a, a pump drive 32a to drive the pump 30a and a dosing head 34a. The pump 30a generates pressure for dispensing the molten filament raw material as the thermoplastic filament F through the nozzle unit 24a. The pump 30a is configured to control, in particular fine tune, the output pressure of the molten filament raw material through the nozzle unit 24a. The nozzle unit 24a comprises a plurality of gas outlet openings (not shown here), through which a flow of gas, in particular compressed air, is output. The flow of gas output by the gas outlet openings is used to influence the filament F emerging from the nozzle unit 24a to form a helical shaped filament F.

The filament output unit 18a and the method of forming the helical shaped filament F is disclosed in more detail in WO 2022/069583 A1.

The manufacturing system 14a comprises a footwear last 36a for shaping the footwear part 10a thereon. By applying the footwear part 10a onto a footwear part contact surface 38a of the footwear last 36a a shape of the footwear part 10a can be defined. The filament output unit 18a is configured to provide the filament F to form the footwear part 10a. The footwear last 36a is detachably connected to the midsole 16a, in particular prior to applying the filament F to the footwear last 36a to form the footwear part 10a. The midsole 16a is for example mechanically, magnetically, adhesively, electrostatically, by a negative pressure, a combination thereof, or the like, detachably held at the footwear last 36a. The manufacturing system 14a comprises a handing unit R to control an application path P for spraying the thermoplastic filament F onto the footwear last 36a. The handling unit R is implemented as a robotic handler. For applying the thermoplastic filament F onto the footwear last 36a, the footwear last 36a is detachably connected to the handling unit R. The handling unit R controls the application path P of the filament F onto the footwear last 36a (in Figure 1 only part of the application P is depicted as an example). The handling unit R is configured to generate a relative movement of the footwear last 36a and the filament output unit 18a, in particular the nozzle unit 24a. The filament output unit 18a is configured for applying at least part of the footwear part 10a onto the midsole 16a to connect the footwear part 10a to the midsole 16a.

The handling unit R is also configured to move the footwear last 36a during the manufacturing process between different manufacturing stations of the manufacturing system 14a. The filament output unit 18a is one such manufacturing station.

The manufacturing system 14a comprises a heating chamber 40a. The heating chamber 40a is one of the previously mentioned manufacturing stations of the manufacturing system 14a. A printer unit (not shown here) to apply a print to the article of footwear 12a and/or a plasma unit (not shown here) to treat the article of footwear 12a are possible further manufacturing stations of the manufacturing system 14a. The heating chamber 40a is configured to heat the footwear last 36a and/or the midsole 16a prior to application of the footwear part 10a onto the midsole 16a and the footwear last 36a. According to an embodiment, the heating chamber 40a comprises a controller. The controller is configured to maintain a certain temperature of the footwear last 36a and/or the midsole 16a in the heating chamber 40a. The handling unit R is configured to automatically pick up the footwear last 36a and/or the midsole 16a from the heating chamber 40a and to move the footwear last 36a and/or the midsole 16a during the manufacturing process between the different manufacturing stations of the manufacturing system 14a, preferably the filament output unit 18a.

The manufacturing system 14a comprises a direct heat unit 42a for heating the midsole 16a prior and/or while applying the footwear part 10a onto the footwear last 36a by a direct heat input. This allows the midsole 16a to be heated both in the heating chamber 40a and by the direct heat unit 42a. For example, the midsole 16a can first be heated in the heating chamber 40a and then specifically with the direct heat unit 42a. The manufacturing system 14a may also be implemented solely with the heating chamber 40a or the direct heat unit 42a.

The heating of the midsole 16a in the heating chamber 40a and/or by direct heat input through the direct heat unit 42a may soften and/or melt at least sections of the midsole 16a for connecting the footwear part 10a to the midsole 16a when the footwear part 10a is applied onto the footwear last 36a. The direct heat input is provided by irradiation, in particular at least partially electromagnetic radiation. Thus, the direct heat unit 42a comprises an irradiation unit. The irradiation unit comprises a laser unit to provide laser light. Alternatively, or additionally, the electromagnetic radiation may comprise microwave radiation. Additionally or alternatively, the irradiation unit may also comprise an acoustic unit for providing acoustic radiation for heating the midsole 16a, in particular by ultrasound.

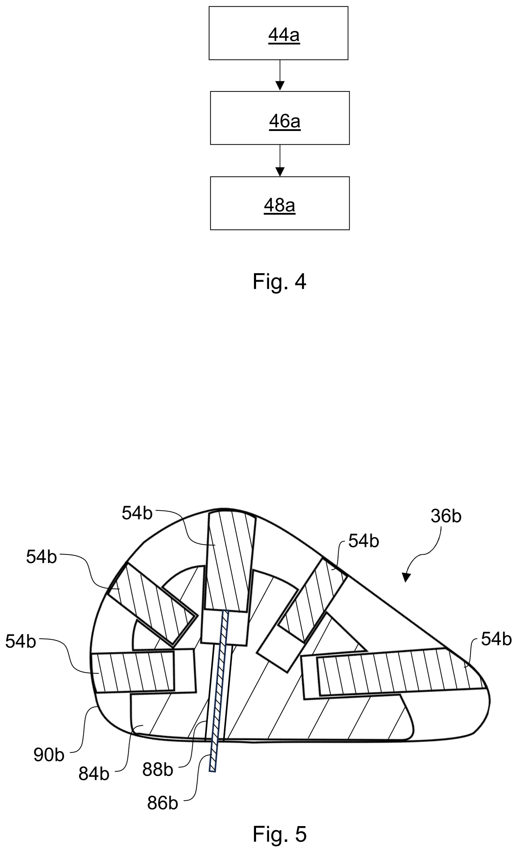

Figure 4 shows a schematic sequence of a method for manufacturing the footwear part 10a. The manufacturing system 14a is configured to perform the method.

In a provisioning step 44a, the footwear last 36a is manufactured based on a foot shape. The footwear last 36a is manufactured by a footwear last manufacturing device 62a. The footwear last manufacturing device 62a is part of the manufacturing system 14a. Alternatively, the footwear last manufacturing device 62a may be implemented separately from the manufacturing system 14a. The footwear last manufacturing device 62a comprises a 3D-printer, an injection molding machine, a CNC milling machine, a combination thereof, or the like.

The foot shape is determined automatically, in particular prior to manufacturing the footwear last 36a. The foot shape or a information pertaining to the foot shape is determined via a foot scanning unit 64a of the manufacturing system 14a. The foot scanning unit 64a comprises a 3D scanner to scan a foot for determining a foot shape. Alternatively or additionally, the foot scanning unit 64a may comprise a pressure measurement platform, a contour gauge, or the like. The foot scanning unit 64a is connected to the footwear last manufacturing device 62a for transferring the information pertaining to the foot shape for manufacturing the footwear last 36a.

In the provisioning step 44a, the footwear last 36a and at least one parameter pertaining to the footwear last 36a are provided to the manufacturing system 14a. The at least one parameter is available to the manufacturing system 14a as data information after being provided to the manufacturing system 14a in the provisioning step 44a.

The at least one parameter is determined during the provisioning step 44a at least partially based on the at least one manufacturing parameter of the footwear last 36a. The at least one manufacturing parameter corresponds to a geometric manufacturing parameter used for manufacturing the footwear last 36a, for example during 3d-printing or the like of the footwear last 36a. The at least one manufacturing parameter is a set parameter used for manufacturing the footwear last 36a. The at least one manufacturing parameter corresponds to the at least one parameter. The at least one parameter is provided as a geometric parameter during the provisioning step 44a. The geometric parameter is a shape parameter, a dimensional parameter, for example a length parameter, a width parameter, or height parameter, a surface structure parameter, or the like. Alternatively, the at least one parameter may also be a temperature parameter, or the like. The at least one manufacturing parameter is based on the determined foot shape.

The footwear last manufacturing device 62a is connected to a control unit (not shown here) of the manufacturing system 14a to transfer, in particular provide, at least one manufacturing parameter of the footwear last 36a to the manufacturing system 14a, preferably the control unit. The at least one manufacturing parameter, in particular the at least one parameter, is automatically sent to the manufacturing system 14a, in particular to the control unit of the manufacturing system 14a. The control unit comprises at least one processor and a memory element, as well as an operating program stored on the memory element. The memory element is implemented as a digital storage medium, for example as a hard disk or the like.

Alternatively or additionally, the foot shape may be determined at least partially manually, for example via a caliper, a measuring tape, or the like. The manually determined information pertaining to the foot shape, which may correspond to the at least one parameter or may be used to determine the at least one parameter, may be input to the manufacturing system 14a via an input unit (not shown here) of the manufacturing system 14a and/or to the footwear last manufacturing device 62a via its user interface. The input unit may comprise a touchscreen, a keyboard, a rotary knob, a button, a keypad, a slider, a combination thereof, or the like, to enable the input of the at least one parameter and/or the information pertaining to the foot shape, preferably by a person or a robot.

Alternatively or additionally, the at least one parameter may be provided to the manufacturing system 14a, in particular to the control unit, via the input unit of the manufacturing system 14a. The input unit may be in data communication with the control unit, in particular wirelessly and/or via a wired connection.

In a configuration step 46a, the manufacturing system 14a is configured based on the at least one parameter. The configuration of the manufacturing system 14a is to be understood to mean that manufacturing parameters for manufacturing the footwear part 10a are defined and/or set, preferably based on the at least one parameter pertaining to the footwear last 36a. The configuration avoids the need for measurements during a forming step 48a, such as distance measurements or the like, particularly those pertaining to the footwear last 36a. The configuration of the manufacturing system 14a, in particular the configuration step 46a, is fully completed before the forming step 48a is carried out. Alternatively, however, it may occur that during and/or after the forming step 48a, measurements, for example inspection measurements or the like, particularly pertaining to the footwear last 36a, are carried out.

The configuration of the manufacturing system 14a includes the configuration of the filament output unit 18a, the handling unit R, and/or other components of the manufacturing system 14a. During the configuration step 46a at least part of the application path P for applying the thermoplastic filament F onto the footwear last 36a for forming the upper element, in particular the footwear part 10a, is determined.

In the forming step 48a, the footwear part 16a is formed using the manufacturing system 14a as configured in the configuration step 46a.

During the forming step 48a the upper element, in particular the footwear part 10a, is formed by applying the thermoplastic filament F onto the footwear last 36a. The thermoplastic filament F is applied along the application path P as determined during the configuration step 46a to form the footwear part 10a.

Fig. 5 to Fig. 7 show further embodiments of the invention. The following descriptions and drawings are essentially limited to the differences between the embodiments, whereby reference can in principle also be made to the drawings and/or description of the other embodiments, in particular to Fig. 1 to Fig. 4, with regard to components with the same designation, in particular with regard to components with the same reference signs. To differentiate between the embodiments, the letter "a" is placed after the reference signs of the embodiment of Fig. 1 to Fig. 4. In the embodiments of Fig. 5 to Fig. 7, the letter "a" is replaced by the letters "b", "c", and "d".

Figure 5 shows a schematic cross-sectional view of a footwear last 36b. A method for manufacturing a footwear part as described in the embodiment of Fig. 1 to Fig. 4 differs by the use of the footwear last 36b at least in that during the provisioning step 44a the at least one parameter is determined at least partially by a configuration setting of the footwear last 36b. The footwear last 36b is implemented as a variable footwear last, its shape being adjusted during the provisioning step 44a. The footwear last 36b comprises a base body 84b and five movable parts 54b that are movably arranged at the base body 84b. The movable parts 54b are linearly movable relative to the base body 84b. The configuration setting of the footwear last 36b is determined by a pose of the movable parts 54b. The pose of the movable parts 54b corresponds to a position of the movable parts 54b, in particular relative to the base body 84b. Alternatively or additionally, the pose may comprise an orientation of the movable parts 54b, preferably relative to the base body 84b.

The movable parts 54b are movable by means of an actuator 86b. The actuator 86b is detachably fixable to the movable parts 54b for changing the pose, in particular the position, of the respective movable part 54b. In Fig. 5, the actuator 86b is detachably fixed to one of the movable parts 54b and may be pushed and/or rotated to move the movable part 54b relative to the base body 84b, in particular parallel to a longitudinal axis of the actuator 86b. The base body 84b comprises channels 88b that are assigned to the movable parts 54b respectively (in Fig. 5, only of the channels 88b is depicted for better clarity).

Alternatively or additionally, it may be envisaged that the footwear last 36b comprises a drive, for example at least one electric servo motor or the like, to change the pose of the movable parts 54b, in particular relative to the base body 84b.

The footwear last 36b comprises a enclosure skin 90b. The enclosure skin 90b forms an outer surface of the footwear last 54b. The enclosure skin 90b is implemented separately from the movable parts 54b and the base body 84b. The enclosure skin 90b is implemented as a flexible wrapping layer. The enclosure skin 90b encloses the movable parts 54b and the base body 84b. The enclosure skin 90b is configured to stretch and/or contract, depending on the pose of the movable parts 54b, in particular relative to the base body 84b. The enclosure skin 90b is configured to bridge gaps of the footwear last 36b that may be generated by moving the movable parts 54b, in particular to avoid gaps at the outer surface of the footwear last 36b. The enclosure skin 90b is removed for adjusting the pose of the movable parts 54b and subsequently reattached.

During the provisioning step 44a, the at least one parameter is determined at least partially based on the pose of the movable parts 54b of the footwear last 36b, in particular relative to the base body 84b.

The pose of the movable parts 54b is determined by a sensor unit (not shown here) of a manufacturing system for manufacturing a footwear part. The sensor unit comprises an optical sensor, such as a camera or image sensor, or the like, for sensing the pose of the movable parts 54b.

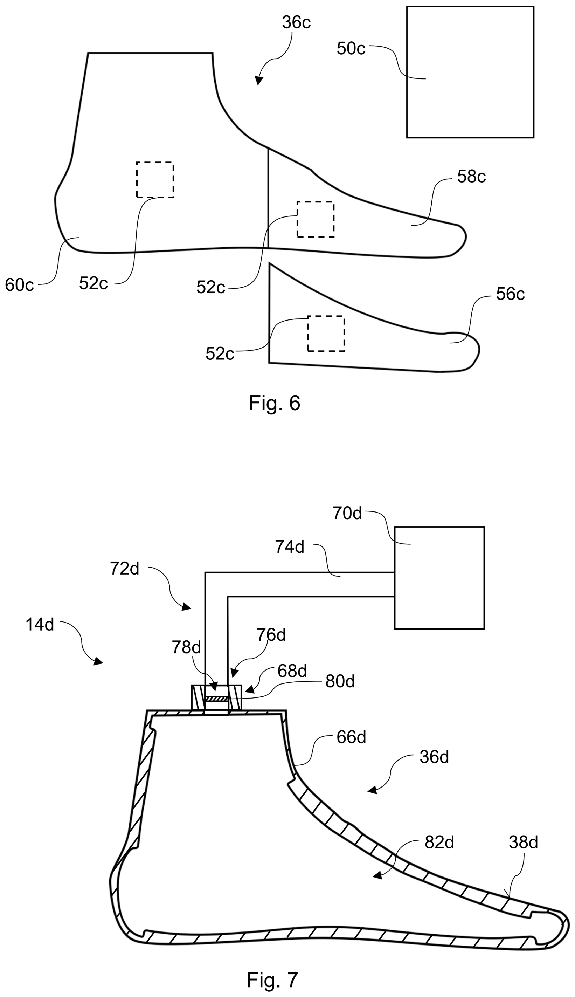

Figure 6 shows a footwear last 36c and a sensor unit 50c. A method for manufacturing a footwear part as described in the embodiment of Fig. 1 to Fig. 4 differs by the use of the footwear last 36c at least in that during the provisioning step 44a the at least one parameter is determined at least partially by sensing using a sensor unit 50c.

During the provisioning step 44a the footwear last 36c is provided by removing at least one footwear last element 56c of the footwear last 36c and/or by supplementing the footwear last 36c with at least one further footwear last element 58c.

The footwear last 36c is assembled from two parts, in particular from the further footwear last element 58c and a footwear last element 60c. The footwear last element 56c is not part of the footwear last 36c used to manufacture a first footwear part but may be used, in particular instead of the further footwear last element 58c, to manufacture at least one second footwear part. The footwear last element 60c corresponds to a rear section of the footwear last 36c and the further footwear last element 58c corresponds to a front section, in particular a toe section, of the footwear last 36c. The footwear last element 56c corresponds to an alternative front section, in particular an alternative toe section, for the footwear last 36c.

The footwear last elements 56c, 58c, 60c each comprise an identification tag 52c. The identification tags 52c are implemented as RFID tags. The identification tags 52c are arranged inside the respective footwear last element 56c, 58c, 60c. Alternatively, the identification tags 52c may also be implemented as barcodes, QR codes, NFC chips, or the like.

During the provisioning step 44a the at least one parameter is determined at least partially based on the identification tags 52c of the footwear last 36c. The sensor unit 50c is configured to detect the identification tags 52c of the footwear last 36c, i.e. the identification tags 52c of the footwear last element 60c and of the further footwear last element 58c.

Figure 7 shows a footwear last 36d comprising an inflatable part 66d. The inflatable part 66d comprises a footwear part contact surface 38d.

The inflatable part 66d is fluidically connected to a gas exchange interface 68d of the footwear last 36d to deflate and/or inflate the inflatable part 66d. The inflatable part 66d is directly fluidically connected to the gas exchange interface 68d.

The inflatable part 66d is connected to a gas supply 70d of a manufacturing system 14d for inflating the inflatable part 66d. The gas supply 70d is implemented separately to the footwear last 36d. The gas supply 70d is fluidically connected to the gas exchange interface 68d via a gas duct unit 72d of the manufacturing system 14d. The gas supply 70d and the gas duct unit 72d are depicted schematically. The gas supply 70d comprises a compressor or the like. The gas duct unit 72d comprises a gas pipe 74d for fluidically connecting the gas supply 70d to the footwear last 36d, in particular to the inflatable part 66d via the gas exchange interface 68d.

The footwear last 36d comprises a closeable gas port 76d that may be opened for deflating the inflatable part 66d. The closeable gas port 76d is be part of the gas exchange interface 68d. The closeable gas port 76d is also used to inflate the inflatable part 66d.

The inflatable part 66d substantially forms the footwear last 36d. Except for the gas exchange interface 68d, the inflatable part 66d forms the shaping carrier 36d. The inflatable part 66d is 3D-printed. The inflatable part 66d is made from silicone.

The footwear last 36d comprises a closure unit 78d for a leaktight closure of the at least one inflatable part 66d. The closure unit 78d comprises a controllable valve 80d for a selectively leaktight closure of the inflatable part 66d. The valve 80d can be actuated by the handling unit R. The closure unit 78d, in particular the controllable valve 80d, is configured for selectively opening and closing the gas port 76d.

A method for manufacturing a footwear part as described in the embodiment of Fig. 1 to Fig. 4 differs by the use of the footwear last 36d at least in that during the provisioning step 44a the at least one parameter is determined at least partially based on a pressure of the footwear last 36d, in particular a gas pressure. An inflation state of the inflatable part 66d defines the at least one parameter. The inflation state denotes a strength of the inflation of the inflatable part 66d. The degree of inflation may, for example, be increased and/or decreased while shaping the footwear part on the footwear last 36d. By changing the inflation state, geometric properties of the inflatable part 66d, and preferably of the footwear last 36d, are modified.

The gas supply 70d is connected to a control unit (not shown here) of the manufacturing system 14d, for example wirelessly and/or via a wired connection. The at least one parameter is provided to the manufacturing system 14d, in particular to the control unit, in the form of a set gas pressure of the gas supply 70d. Alternatively, the manufacturing system 14d may comprise a sensor unit comprising at least one pressure sensor for measuring the pressure of the footwear last 36d. The at least one pressure sensor may be arranged in an inflation chamber 82d of the footwear last 36d, in particular of the inflatable part 66d.

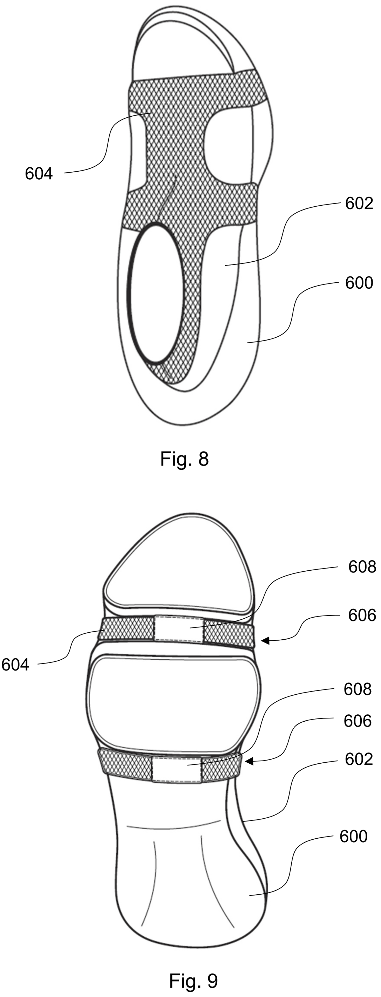

To differentiate between the embodiments, in the embodiments of Figure 8 to Figure 15, the numbers "6", "7", "8", "9", "10" and "11" are added in front of the reference sign.

Figure 8 and Figure 9 show a further embodiment of the invention, in which a sole unit, preferably a midsole 600 is detachably held at a footwear last 602 by a holding element 604. The holding element 604 encloses part of the midsole 600 and part of the footwear last 602. In this embodiment the holding element 604 is made from a textile fabric. The holding element 604 extends along parts of different sections of the footwear last 602. The holding element 604 extends along parts of a toe section, a middle foot section and an ankle section of the footwear last 602.

The midsole 600 comprises retaining paths 606, which are essentially designed as recesses. The holding element 604 extends from the footwear last 602 along the retaining paths 606 of the midsole 600. The retaining paths 606 are configured to keep the holding element 604 in position and prevent the holding element 604 from slipping off the midsole 600 and/or the footwear last 602.

The holding element 604 further comprises two fastening elements 608 for attaching the holding element 604 to and detaching the holding element 604 from the footwear last 602 or the midsole 600. In this embodiment, the fastening elements 608 are hook and loop fasteners. The fastening elements 608 are positioned on the side of the holding element 604 that is located at the midsole 600.

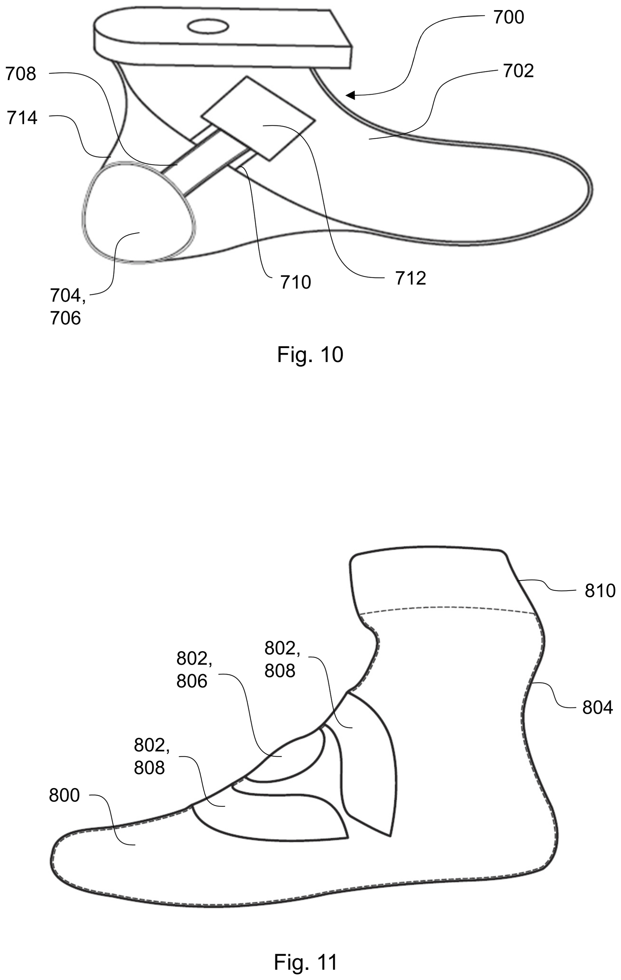

Figure 10 shows a schematic cross-sectional view of a further embodiment of a footwear last 700. The footwear last 700 comprises a base body 702 and one movable part 704 that is movably arranged at the base body 702. According to this embodiment of the invention, the movable part 704 is designed as a heel section 706 of the footwear last 700. The heel section 706 is linearly movable relative to the base body 702. The configuration setting of the footwear last 700 is determined by a pose of the heel section 706. The pose of the heel section 706 corresponds to a position of the heel section 706, in particular relative to the base body 702. Alternatively or additionally, the pose may comprise an orientation of the heel section 706, preferably relative to the base body 702.

The heel section 706 is movable by means of an actuator 708. The actuator 708 is detachably fixable to the heel section 706 for changing the pose, in particular the position, of the heel section 706. In Figure 10, the actuator 708 is detachably fixed to the heel section 706 and may be pushed and/or rotated to move the heel section 706 relative to the base body 702, in particular parallel to a longitudinal axis of the actuator 708. The base body 702 comprises a channel 710 that is assigned to the heel section 706 respectively.

Alternatively or additionally, it may be envisaged that the footwear last 700 comprises a drive 712, for example at least one electric servo motor or the like, to change the pose of the heel section 706, in particular relative to the base body 702. The drive 712 is embedded in the base body 702 of the footwear last 700.

The footwear last 700 comprises an enclosure skin 714. The enclosure skin 714 forms an outer surface of the footwear last 700. The enclosure skin 714 is implemented separately from the heel section 706 and the base body 702. The enclosure skin 714 is implemented as a flexible wrapping layer. The enclosure skin 714 encloses the heel section 706 and the base body 702. The enclosure skin 714 is configured to stretch and/or contract, depending on the pose of the heel section 706, in particular relative to the base body 702. The enclosure skin 714 is configured to bridge gaps of the footwear last 700 that may be generated by moving the heel section 706, in particular to avoid gaps at the outer surface of the footwear last 700. The enclosure skin 714 is removed for adjusting the pose of the heel section 706 and subsequently reattached.

During the provisioning step 44a, the at least one parameter is determined at least partially based on the pose of the heel section 706 of the footwear last 700, in particular relative to the base body 702. The pose of the movable part 704 is determined by a sensor unit (not shown here) of a manufacturing system for manufacturing a footwear part. The sensor unit comprises an optical sensor, such as a camera or image sensor, or the like, for sensing the pose of the movable part 704.

Figure 11 shows a footwear last 800 comprising a plurality of inflatable parts 802. The inflatable parts 802 comprise a footwear part contact surface 804. The inflatable parts

802 are fluidically connected to a gas exchange interface (not shown here) of the footwear last 800 to deflate and/or inflate the inflatable parts 802. The inflatable parts 802 can be inflated and/or deflated simultaneously and/or independently of each other.

The inflatable parts 802 are connected to a gas supply (not shown here) of a manufacturing system for inflating the inflatable parts 802. The gas supply is fluidically connected to the gas exchange interface via a gas duct unit (not shown here) of the manufacturing system.

The inflatable parts 802 are arranged onto a middle foot section of the footwear last 800. The inflatable parts 802 are arranged in an area on the footwear last 800 that is opposite to the area the sole unit is arranged on the footwear last 800. The inflatable parts 802 are essentially designed as cushion elements and come in different geometric shapes. The first inflatable part 806 has a circular geometry. The other two inflatable parts 808 have curved geometries, each extending around half of the circle of the first inflatable part 806.

An outer skin 810 is attached to the footwear last 800 and the inflatable parts 802. The outer skin 810 forms the footwear part contact surface 804 of the footwear last 800. The outer skin 810 is implemented separately from the inflatable parts 802 and the footwear last 800. The outer skin 810 encloses the inflatable parts 802 and the footwear last 800. The outer skin 810 is configured to stretch and/or contract, depending on the inflation state of the inflatable parts 802, in particular relative to the footwear last 800. The outer skin 810 is configured to bridge gaps of the footwear last 800 that may be generated by inflating the inflatable parts 802, in particular to avoid gaps at the footwear part contact surface 804 of the footwear last 800.

The inflatable parts 802 and the outer skin 810 are 3D-printed. The inflatable parts 802 and the outer skin 810 are made from silicone.

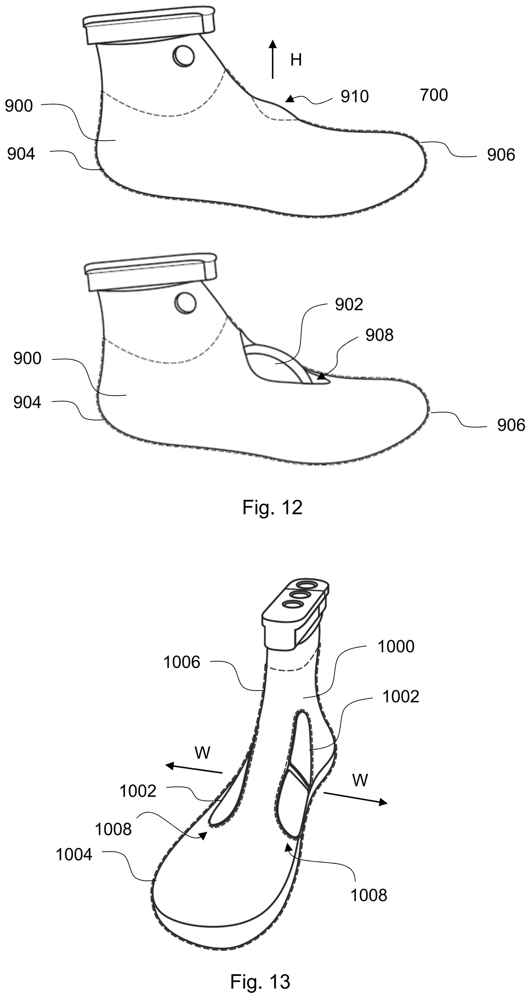

Figure 12 shows a further embodiment of a footwear last 900 comprising an inflatable part 902. The inflatable part 902 comprises a footwear part contact surface 904. The inflatable part 902 is arranged onto a middle foot section of the footwear last 900. The inflatable part 902 is arranged in an area on the footwear last 900 that is opposite to the area the sole unit is arranged on the footwear last 900. The inflatable part 902 is essentially designed as a cushion element. An outer skin 906 is attached to the footwear last 900 and the inflatable part 902. The outer skin 906 forms the footwear part contact surface 904 of the footwear last 900.

The footwear last 900 comprises a recess area 908 configured to accommodate the inflatable 902 part. The depth of the recess area 908 into the footwear last 900 is configured in such a way that the inflatable part 902 protrudes from the recess area 908 in an inflated state of the inflatable part 902.

The inflatable part 902 is arranged on the footwear last 900 in such a way that, when inflated, it expands the outer skin 906 of the footwear last 900 especially in the direction of the height H of the footwear last 900. The inflatable part 902 is designed to provide the outer skin 906 of the footwear last 900 in an inflated state with at least a partially rounded area 910 in the height direction H of the footwear last 900.

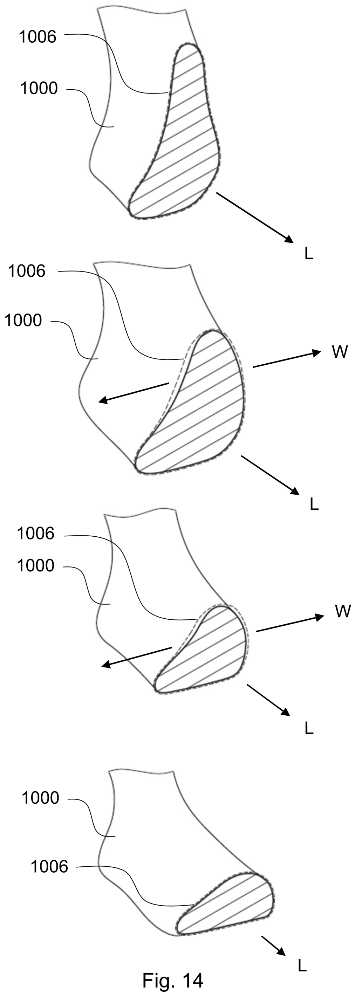

The inflatable part 902 and the outer skin 906 are 3D-printed. The inflatable part 902 and the outer skin 906 are made from silicone.Figure 13 and Figure 14 show a further embodiment of a footwear last 1000 comprising two inflatable parts 1002. The inflatable parts 1002 comprise a footwear part contact surface 1004. The inflatable parts 1002 are arranged onto a middle foot section of the footwear last 1000. The inflatable parts 1002 are arranged in an area on the footwear last 1000 that is opposite to the area the sole unit is arranged on the footwear last 1000. The inflatable parts 1002 are essentially designed as cushion elements. An outer skin 1006 is attached to the footwear last 1000 and the inflatable parts 1002. The outer skin 1006 forms the footwear part contact surface 1004 of the footwear last 1000.

The footwear last 1000 comprises two recess areas 1008 configured to accommodate the inflatable parts 1002. The depth of the recess areas 1008 into the footwear last 1000 are configured in such a way that the inflatable parts 1002 protrude from the recess areas 1008 in an inflated state of the inflatable parts 1002.

The inflatable parts 1002 are arranged on the footwear last 1000 in such a way that, when inflated, it expands the outer skin 1006 of the footwear last 1000 especially in the direction of the width W of the footwear last 1000. Figure 14 shows different sectional views of the expansion in the direction of the width W of the outer skin 1006 in relation to the direction of the length L of the footwear last 1000. The inflatable parts 1002 are designed so that when inflated, the inflatable parts 1002 do not form a round shape, but rather a flattened shape that still protrudes from the footwear last 1000. According to further embodiments, this flattened shape of the inflatable parts 1002 can also be achieved by incorporating flattening elements and/or outlets (not shown here) into the inflatable parts 1002. The flattening elements and/or outlets can be incorporated into the inflatable parts 1002 subsequently and/or during the manufacturing process of the inflatable parts 1002, preferably by 3D-printing.

The inflatable parts 1002 and the outer skin 1006 are 3D-printed. The inflatable parts 1002 and the outer skin 1006 are made from silicone.

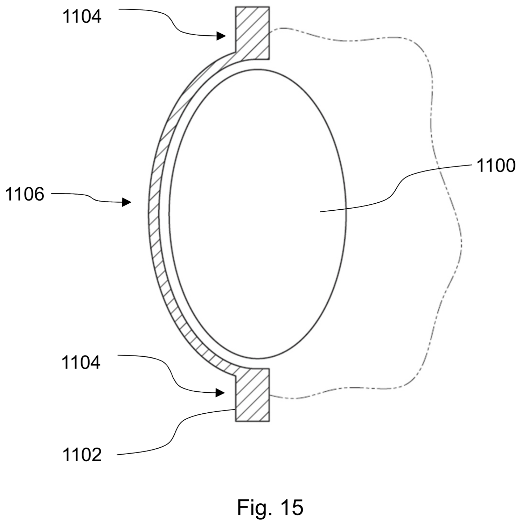

Figure 15 shows a cross sectional view of an inflatable part 1100 according to a further embodiment. The inflatable part 1100 is arranged between an outer skin 1102 and a footwear last (not shown here). The outer skin 1102 comprises sections with different wall thicknesses. The outer skin 1102 comprises sections with a higher wall thickness 1104 and a section with a lower wall thickness 1106 compared to the sections with the higher wall thickness 1104. The inflatable part 1100 is arranged at the section with the lower wall thickness 1106, so that it can protrude out of the footwear last in an inflated state of the inflatable part 1100. The sections with the higher wall thickness 1104 increase the stiffness of the outer skin 1102.

Various modifications to the embodiments described are possible and will occur to those skilled in the art without departing from the invention, which is defined by the following claims.

## Claims

1. A method for manufacturing a footwear part (16a), comprising:
- a provisioning step (44a) in which a footwear last (36a-d, 602, 700, 800, 900, 1000) and at least one parameter pertaining to the footwear last (36a-d, 602, 700, 800, 900, 1000) are provided to a manufacturing system (14a),
- a configuration step (46a) in which the manufacturing system (14a) is configured based on the at least one parameter, and
- a forming step (48a) in which the footwear part (16a) is formed using the manufacturing system (14a) as configured in the configuration step (46a).

2. The method according to claim 1,
wherein during the provisioning step (44a) the at least one parameter is provided as a geometric parameter.

3. The method according to any one of the preceding claims,
wherein during the provisioning step (44c) the at least one parameter is determined at least partially by sensing using a sensor unit (50c).

4. The method according to any one of the preceding claims,
wherein during the provisioning step (44a) the at least one parameter is determined at least partially by a configuration setting of the footwear last (36b-d, 602, 700, 800, 900, 1000).

5. The method according to any one of the preceding claims,
wherein during the provisioning step (44a) the at least one parameter is determined at least partially based on a pressure of the footwear last (36d).

6. The method according to any one of the preceding claims,
wherein during the provisioning step (44a) the at least one parameter is determined at least partially based on at least one identification tag (52c) of the footwear last (36c).

7. The method according to any one of the preceding claims,
wherein during the provisioning step (44a) the at least one parameter is determined at least partially based on a pose of at least one movable part (54b) of the footwear last (36b).

8. The method according to any one of the preceding claims,
wherein during the provisioning step (44a) the at least one parameter is determined at least partially based on at least one manufacturing parameter of the footwear last (36a).

9. The method according to any one of the preceding claims,
wherein during the provisioning step (44a) the footwear last (36a) is manufactured based on a foot shape.

10. The method according to any one of the preceding claims,
wherein the footwear last (36b-d, 602, 700, 800, 900, 1000) is implemented as a variable footwear last, its shape being adjusted during the provisioning step (44a).

11. The method according to claim 10,
wherein during the provisioning step the footwear last (36c) is provided by removing at least one footwear last element (56c) of the footwear last (36c), and/or by supplementing the footwear last (36c) with at least one further footwear last element (58c).

12. The method according to any one of the preceding claims,
wherein during the configuration step (46a) at least part of an application path (P) for applying a thermoplastic filament (F) onto the footwear last (36a-d, 602, 700, 800, 900, 1000) for forming an upper element of an article of footwear (12a) is determined.

13. The method according to any one of the preceding claims,
wherein during the forming step (48a) an upper element of an article of footwear (12a) is formed by applying a thermoplastic filament (F) onto the footwear last (36a-d), in particular along an application path (P) as determined during the configuration step (46a).

14. An article of footwear (12a), in particular a sports- and/or leisure shoe, comprising:
- a footwear part (10a) manufactured by a method according to any one of the preceding claims; and/or
- a footwear element derived from a footwear part (10a) manufactured by a method according to any one of the preceding claims.

15. A manufacturing system (14a) for manufacturing a footwear part (10a), the manufacturing system (14a) configured to perform the method according to any one of the claims 1 to 13.
